# EUROPEAN PATENT APPLICATION

(11) **EP 3 107 055 A1**
(43) Date of publication of application: **21.12.2016**
(21) Application number: 15003311.6
(22) Date of filing: 20.11.2015
(51) Int. Cl.: G06Q 20/32, G06Q 20/36, G06Q 20/40

(54) **MOBILE TERMINAL FOR AUTHORIZING PAYMENT AT SCHEDULED TIME AND METHOD FOR CONTROLLING THE SAME**

(30) Priority: 17.06.2015 KR 20150085634
(71) Applicant: LG Electronics Inc., Seoul 07336 (KR)
(72) Inventor: CHO, Taehoon, 06772 Seoul (KR); SEOL, Jie, 06772 Seoul (KR)
(74) Representative: Beyer, Andreas

(57) **Abstract**

A mobile terminal capable of authorizing a payment at a scheduled time and method for controlling the same are disclosed in the present specification, by which a payment information input timing and a payment authorization input timing are separated from each other. The mobile terminal according to the present specification includes a wireless communication unit configured to transmit a payment information, a display device configured to receive an input and to display a screen related to the payment information, and a controller configured to set a payment authorization timing for the payment information in response to the input at the display device, and in response to receiving a payment authorization input at the payment authorization timing, the controller configured to control the wireless communication unit to transmit the payment information.

## Description

Pursuant to 35 U.S.C. § 119(a), this application claims the benefit of earlier filing date and right of priority to Korean Application No. 10-2015-0085634, filed on June 17, 2015, the contents of which are hereby incorporated by reference herein in their entirety.

### BACKGROUND OF THE INVENTION

### Field of the Invention

The present invention relates to a mobile terminal, and more particularly, to a mobile terminal capable of a financial payment and method for controlling the same. Although the present invention is suitable for a wide scope of applications, it is particularly suitable for authorizing a payment at a scheduled time.

### Discussion of the Related Art

Generally, terminals can be classified into mobile/portable terminals and stationary terminals according to presence or non-presence of mobility. And, the mobile terminals can be further classified into handheld terminals and vehicle mount terminals according to possibility of user's direct portability.

Further, functions of the mobile terminals tend to be diversified. Examples of such functions include data and voice communications, photography and videography via a camera, recording audio, playing music files and outputting music via a speaker system, and displaying images and video on a display. Some terminals include additional functionality which supports game playing, while other terminals are also configured as multimedia players. More recently, mobile terminals have been configured to receive broadcast and multicast signals which permit viewing of contents, such as videos and television programs.

As the functions of the terminal are getting diversified, the terminal tends to be implemented as a multimedia player provided with composite functions such as photographing of photos or videos, playback of music or video files, game play, broadcast reception and the like for example.

Recently, the application area of the mobile terminal has been extended to the payment system with the developments of the finance technology. For example, if the mobile terminal is issued with a mobile card, a user can purchase a product by bring the mobile terminal issued with the mobile card to an NFC payment terminal. Moreover, payment can be made in a manner of accessing a webpage and inputting information on the mobile card.

Meanwhile, assume a case that a user of the mobile terminal orders food at a place one hour apart from a restaurant and then picks up the food at a desired time. In this case, if 30 minutes are required for preparing the food, the user should order and pay for the food 30 minutes ago before arriving at the restaurant. And, then the user can pick up the food at a time when the food is ready. In particular, the user of the mobile terminal may not pay for the food when the user decides to order the food or while the user moves. Instead, the user should inconveniently order and pay for the food when the user arrives at a place 30 minutes apart from the restaurant after starting moving. Therefore, a method of solving a problem of inconvenience is required.

### SUMMARY OF THE INVENTION

Accordingly, embodiments of the present invention are directed to a mobile terminal for authorizing a payment at a scheduled time and method for controlling the same that substantially obviate one or more problems due to limitations and disadvantages of the related art.

An object of the present invention is to provide a mobile terminal for authorizing a payment at a scheduled time and method for controlling the same.

Technical tasks obtainable from the present invention are non-limited by the above-mentioned technical task. And, other unmentioned technical tasks can be clearly understood from the following description by those having ordinary skill in the technical field to which the present invention pertains.

Additional advantages, objects, and features of the invention will be set forth in the disclosure herein as well as the accompanying drawings. Such aspects may also be appreciated by those skilled in the art based on the disclosure herein.

To achieve these objects and other advantages and in accordance with the purpose of the invention, as embodied and broadly described herein, a mobile terminal according to the present invention may include a wireless communication unit configured to transmit a payment information, a display device configured to receive an input and to display a screen related to the payment information, and a controller configured to set a payment authorization timing for the payment information in response to the input at the display device, and in response to receiving a payment authorization input at the payment authorization timing, the controller configured to control the wireless communication unit to transmit the payment information.

According to an embodiment of the present specification, the control unit may control the display device to display a payment information, relating to the set payment authorization timing.

According to an embodiment of the present specification, the controller may control the display device to display a remaining time until a time point at the set payment authorization timing.

According to an embodiment of the present specification, in response to arrival of the payment authorization timing, the controller may control the display device to display a guide screen to receive the payment authorization input.

According to an embodiment of the present specification, the payment authorization input comprises at least one selected from the group consisting of a screen touch input, a password input, a pattern input and a biometric information input.

According to an embodiment of the present specification, wherein the controller may change a type of the payment authorization input based on either the input of a user or a situation of the user.

According to an embodiment of the present specification, in response to arrival of the payment authorization timing, the controller may wait for the payment authorization input during a standby time.

According to an embodiment of the present specification, when the standby time elapses without the payment authorization input, the controller may cancel a payment process.

According to an embodiment of the present specification, in response to receiving the payment authorization input while the standby time elapses without the payment authorization input, the controller may control the display device to display a delayed time.

According to an embodiment of the present specification, when the payment authorization input is received after the standby time elapses, the controller may control the display device to display a guide screen for indicating whether to change the payment information.

According to an embodiment of the present specification, when the standby time elapses without the payment authorization input, the controller may execute operation of an automatic call sending mode.

According to an embodiment of the present specification, the set payment authorization timing corresponds to a time directly inputted by the user.

According to an embodiment of the present specification, the set payment authorization timing corresponds to a time set based on an estimated arrival time calculated using the payment information.

According to an embodiment of the present specification, the controller may launch a navigation application for guiding payment based on the payment information.

According to an embodiment of the present specification, the controller may control the display device to display a moving path displayed by the navigation application.

According to an embodiment of the present specification, when the payment authorization timing has almost arrived, the controller may control the display device to display a part of the payment information on the moving path.

A method of controlling a mobile terminal comprises a step of setting a payment authorization timing for a payment information in response to receiving an input at a display device, a step of displaying, on the display device, a payment authorization guide screen at the payment authorization timing, and a step of controlling a wireless communication unit to transmit the payment information in response to receiving a payment authorization input.

Accordingly, the present invention provides the following effects and/or advantages.

According to at least one of embodiments of the present invention, a payment information input timing and a payment authorization input timing can be separated from each other.

Effects obtainable from the present invention may be non-limited by the above mentioned effect. And, other unmentioned effects can be clearly understood from the following description by those having ordinary skill in the technical field to which the present invention pertains.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. The above and other aspects, features, and advantages of the present invention will become more apparent upon consideration of the following description of preferred embodiments, taken in conjunction with the accompanying drawing figures. In the drawings:
FIG. 1a is a block diagram to describe a mobile terminal related to the present invention;
FIGs. 1b and 1c are conceptual diagrams for one example of a mobile terminal related to the present invention, viewed from different directions;
FIG. 2 is a diagram for an example of a process for a general mobile card payment;
FIG. 3 is a diagram for an example of a process for a reserved payment in a mobile terminal according to the present specification;
FIG. 4 is a diagram for an example of displaying a time remaining until a payment authorization time on a top portion of a home screen;
FIG. 5 is a diagram for an example of a payment authorization input;
FIG. 6 is a diagram for an example of changing a payment authorization input method;
FIG. 7 is a diagram for an example of displaying a guide screen for indicating whether to authorize a payment in a situation that a display unit is turned off;
FIG. 8 is a diagram for an example of a situation of no payment authorization input from a user;
FIG. 9 is a diagram for an example of displaying a guide screen for indicating whether to change a payment information;
FIG. 10 is a diagram for an example of an automatic call sending mode after elapse of a payment standby time;
FIG. 11 is a diagram of an example for a user to edit a payment information after setting a reserved payment;
FIG. 12 is a diagram of an example for a navigation application to guide a way to destination using a payment information;
FIG. 13 is a diagram for an example of a reserved payment for a hotel stay payment;
FIG. 14 is a diagram for an example of an activated electronic key; and
FIG. 15 is a diagram for an example of a hotel check-out payment.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

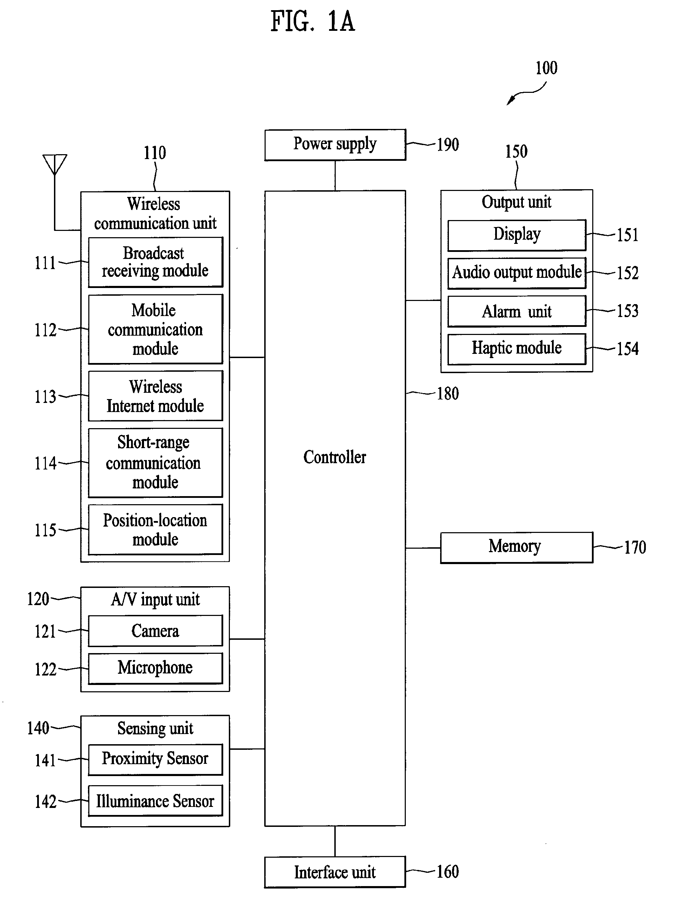

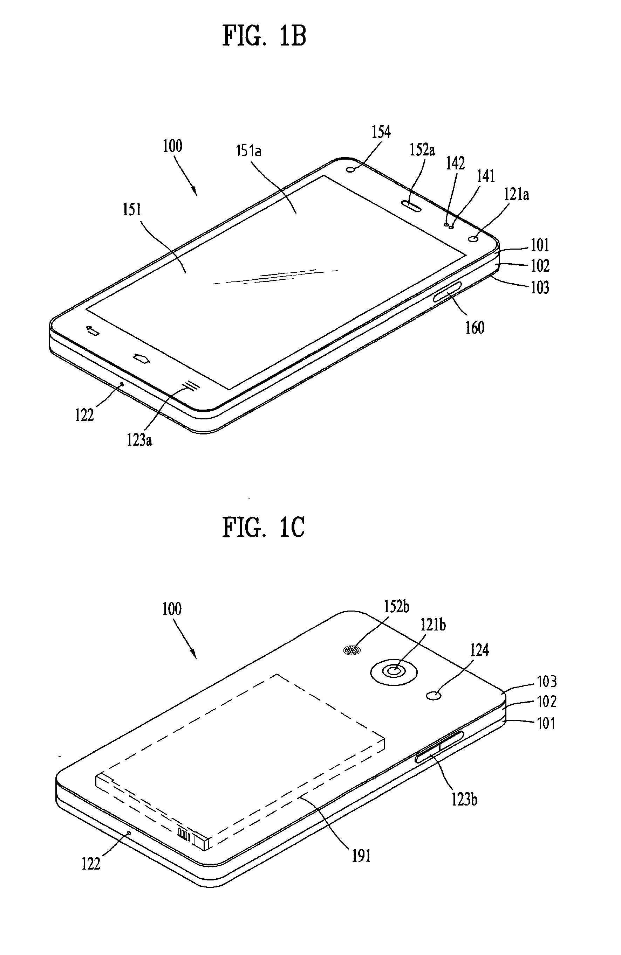

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented. Referring now to FIG. 1A, the mobile terminal 100 is shown having wireless communication unit 110 configured with several commonly implemented components.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks.

To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142. If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154. The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 can process or provide appropriate information or function to a user by processing signals, data, information and the like inputted or outputted through the above-mentioned components or running application programs saved in the memory 170.

The controller 180 may provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

At least one portion of the above-mentioned components can cooperatively operate to embody operations, controls or controlling methods of the mobile terminal according to various embodiments mentioned in the following description. And, the operations, controls or controlling methods of the mobile terminal can be embodied on the mobile terminal by running at least one or more application programs saved in the memory 170.

Referring still to FIG. 1A, various components depicted in this figure will now be described in more detail.

Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE), LTE-A(Long Term Evolution-Advanced), and the like).

Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal. As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others. As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images.

A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provides internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal.

In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The mobile terminal 100 may be provided with the display unit 151, the first audio output unit 152a, the second audio output unit 152b, the proximity sensor 141, the illumination sensor 142, the light output unit 154, the first camera 121a, the second camera 121b, the first manipulating unit 123a, the second manipulating unit 123b, the microphone 122, the interface unit 160, and the like.

FIGS. 1B and 1C depict certain components as arranged on the mobile terminal.

However, it is to be understood that alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices.

Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject.

As shown in FIG. 1B, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160.

Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

Further preferred embodiments will be described in more detail with reference to additional drawing figures. It is understood by those skilled in the art that the present features can be embodied in several forms without departing from the characteristics thereof.

The mobile terminal 100 according to the present specification may be issued with a mobile card. Thus, the mobile terminal 100 can process a financial payment using the issued mobile card. There may be various types of methods for issuing the mobile card to the mobile terminal 100. Since the methods are disclosed to public, detailed description shall be omitted.

A financial payment process, which is performed on the mobile terminal 100 using the mobile card, can be mainly divided into two steps. In particular, a payment information is received from a user in a 1st step and a payment authorization information is received from the user in a 2nd step. The payment information means such an information necessary for the financial payment as a unique number of the mobile card, an expiration data, a CVC number, a payment amount, a service provider or the like. On the other hand, the payment authorization information means inputs from the user of the mobile terminal 100 to authorize all processes for completing the payment after inputting the payment information. The payment authorization information can be inputted by various methods such as a simple screen touch, a password input, a fingerprint input, a voice input and the like.

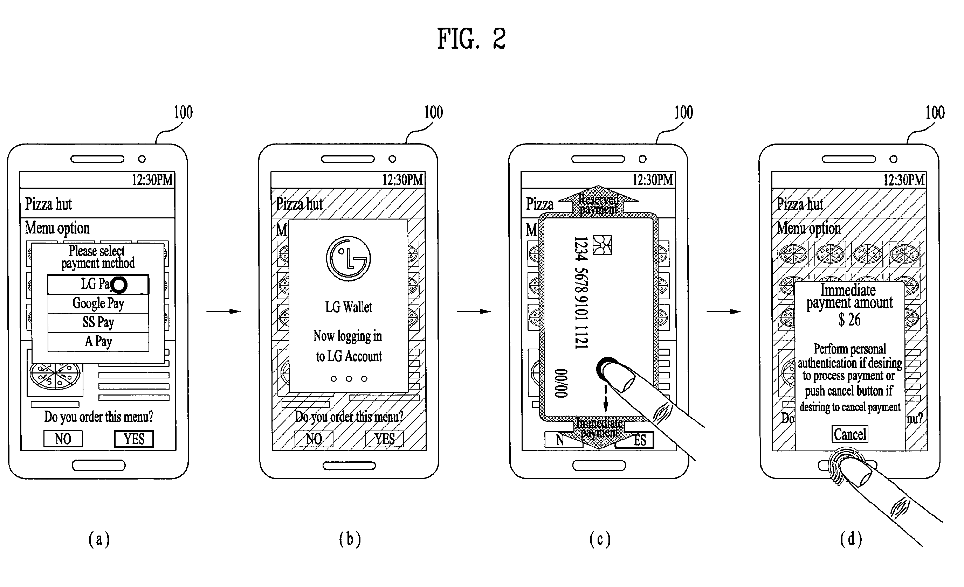

The payment information and the payment authorization information will be described in more detail with reference to FIG. 2.

FIG. 2 is a diagram for an example of a process for a general mobile card payment.

Referring to FIG. 2, the mobile terminal 100 having a mobile card may be checked. The situation shown in FIG. 2 corresponds to a situation that a user orders food to a restaurant and pays for the food through the mobile card. First, referring to FIG. 2 (a), the user may select a payment method. In this case, as shown in FIG. 2 (b), the user may log in to a unique account of the user. And, referring to FIG. 2 (c), an image of card used for a payment may be displayed on the display unit 151. The user checks the image of the card and may then confirm whether the checked card corresponds to the card used for the payment. In this case, the user may input in order to process 'immediate payment' by touching and dragging down the card image. Subsequently, as shown in FIG. 2 (d), a payment amount is displayed on the display unit 151 and the mobile terminal 100 may enter a state of standing by an authorization of the user. In this case, the user may input a fingerprint of the user as an expression of the payment authorization. The payment using the mobile card included in the mobile terminal 100 is performed through the above-mentioned process. In this case, if an information required for the process mentioned with reference to FIGs. 2 (a) to (d) corresponds to 'payment information' according to the present specification, the fingerprint information, which is inputted as the expression of the payment authorization of the user, corresponds to 'payment authorization information' according to the present specification.

Meanwhile, an input of dragging up after touching the card image may become an input of enabling 'reserved payment' to be performed. The 'reserved payment' will be described in more detail in the following specification.

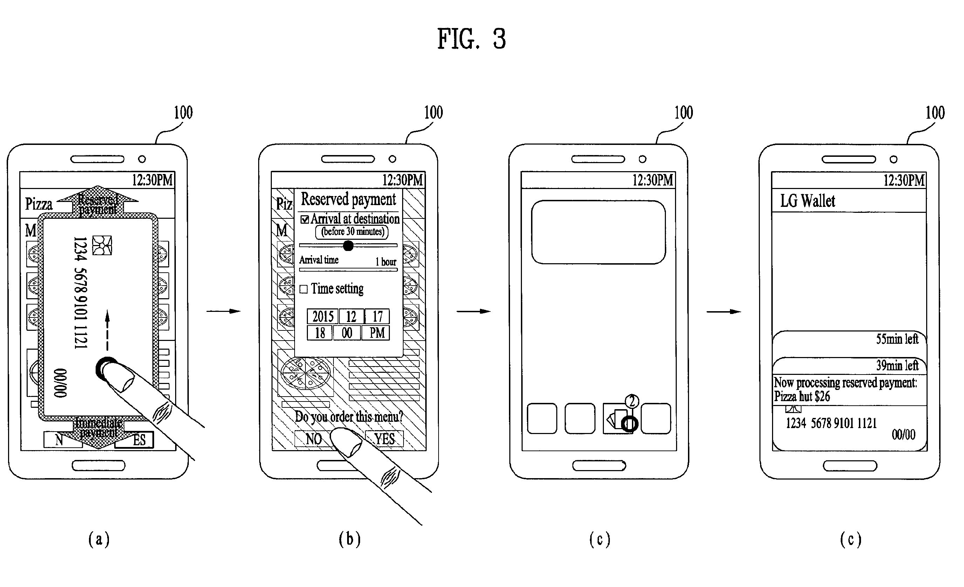

The mobile terminal 100 according to the present specification may set a timing capable of inputting the payment authorization information in the course of the payment process. In particular, the mobile terminal 100 can set a timing of inputting the payment information and a timing of inputting the payment authorization information to be separated from each other in time. For instance, in case of the 'immediate payment', the process for inputting the payment information and the payment authorization information are continuously performed as a series of operations. However, in case of the 'reserved payment', a prescribed time interval may exist between a timing at which the input of the payment information is completed and the timing of inputting the payment authorization information. To this end, the mobile terminal 100 according to the present specification may include the following components. First of all, it may include the wireless communication unit 110 configured to transmit a payment information. Secondly, it may include the display unit 151 configured to receive an input of a user and output a screen related to the payment information. Thirdly, it may include the control unit 180 configured to set a payment authorization timing for the payment information in response to the input of the user through the display unit 151 and control the wireless communication unit 110 to transmit the payment information in receiving a payment authorization input of the user at the payment authorization timing. More details will be described with reference to FIGs. 3 to 15.

FIG. 3 is a diagram for an example of a process for a reserved payment in a mobile terminal according to the present specification.

Referring to FIG. 3 (a), it may be checked that the drawing is similar to that shown in FIG. 2 (c). However, in FIG. 3 (a), a user may input in order to perform 'reserved payment' by dragging up after touching the card image, different from the embodiment shown in FIG. 2 (c). Subsequently, a screen capable of setting the payment authorization timing is displayed as shown in FIG. 3 (b). The payment authorization timing means a timing at which a payment authorization input is received from the user, i.e., a timing at which the payment is actually performed.

Meanwhile, the control unit 180 may control an information on a payment to which the payment authorization timing is set to be displayed on the display unit 151. If the payment authorization timing is completely set, an indication for a reserved payment may be displayed on an icon as shown in FIG. 3 (c). In an example shown in FIG. 3 (c), it may be checked that two payments are reserved since a number '2' is displayed on a top portion of the icon. Moreover, if an application is launched in a manner of touching the icon, the user may check detailed informations on the two reserved payments as shown in FIG. 3 (d). A card image used for each of the two reserved payments and a payment amount paid by each card are displayed in an example shown in FIG. 3 (d).

Meanwhile, a user input for selecting one of the 'immediate payment' and the 'reserved payment' is just exemplary and it should be understood that various types of inputs are possible. Moreover, regarding a timing for selecting the 'immediate payment' and the 'reserved payment', it may be possible to select one of the 'immediate payment' and the 'reserved payment' at various timings such as selecting after inputting the payment information different from the example in the drawing and the like. Furthermore, although the card images for the two payments are displayed by being distinguished from each other in the example shown in FIG. 3 (d), the card images may be combined into a single image. In this case, the card images may be combined when the same mobile card is used for at least 2 reserved payments or irrespective of kinds of cards. Further, in case that card images for at least 2 reserved payments are combined into a single image, payment informations such as payment amounts and the like on the at least 2 reserved payments may be displayed by being integrated or being distinguished from each other.

The control unit 180 according to the present specification may control a time remaining until the payment authorization timing for the payments to which the payment authorization timing is set to be displayed on the display unit 151

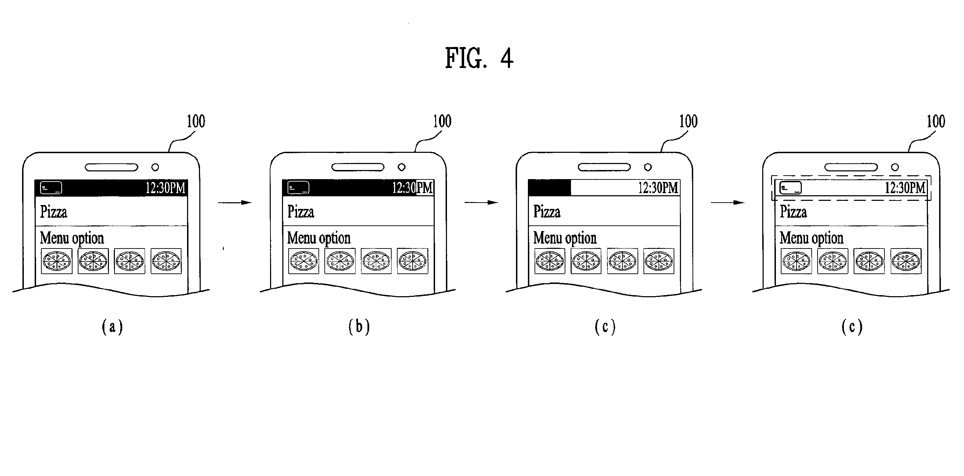

FIG. 4 is a diagram for an example of displaying a time remaining until a payment authorization time on a top portion of a home screen.

Referring to FIGs. 4 (a) to (d), a shape of a bar, which is reduced as time passed, may be checked. The reduced bar corresponds to a graphic effect for indicating the payment authorization timing and may enable a user to know the time remaining until the payment authorization timing by intuition. Moreover, as shown in FIG. 3 (d), the time remaining until the payment authorization timing may be expressed as a number together with a figure of the bar shape reduced as time passed.

Meanwhile, as an embodiment shown in FIG. 4, the time remaining until the payment authorization timing may be displayed on a bottom and side portion of a home screen of the mobile terminal 100 as well as on a top portion of the home screen of the mobile terminal 100. Moreover, the display unit 151 may become a bended display including a main region facing a front surface of the mobile terminal 100 and a subregion, which is extended from the main region, having prescribed curvature. In this case, the time remaining the payment authorization timing may be displayed on the subregion.

The mobile terminal 100 according to the present specification may inform the user of arrival of the payment authorization timing through various types of methods.

In order to inform the arrival of the payment authorization timing, the various types of methods including a method of displaying a notification widow on the display unit 151, an audio notification using the audio output module 152, an optical notification using the optical output module 154, a notification using the haptic module 153 and the like may be used. And, a combination of at least 2 of the above-mentioned methods may be used for informing the arrival of the payment authorization timing. In this case, the control unit 180 may output a control signal for informing the user of the arrival of the payment authorization timing if the payment authorization timing arrives.

The mobile terminal 100 according to the present specification may output a guide screen to receive a payment authorization input from the user through display unit 151.

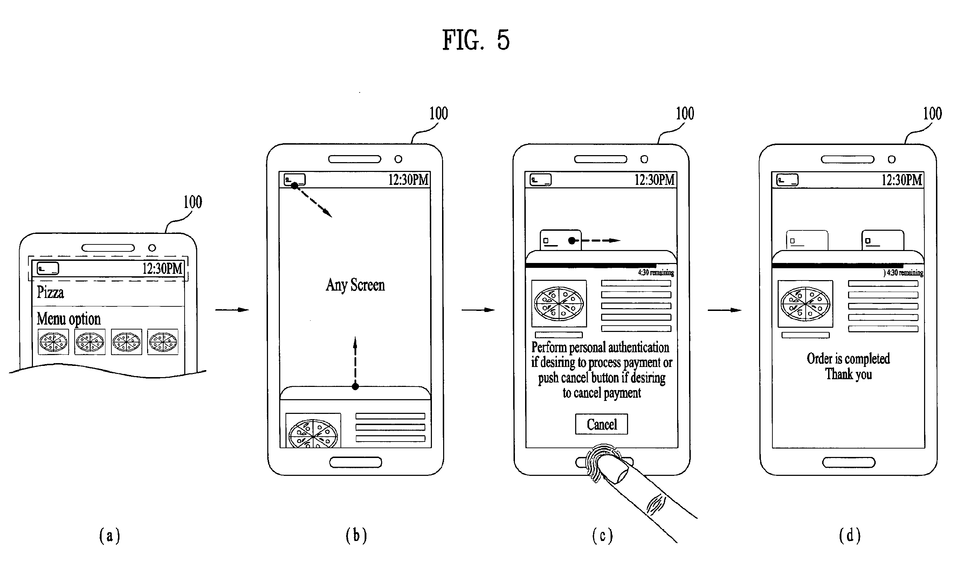

FIG. 5 is a diagram for an example of a payment authorization input.

Referring to FIG. 5 (a), the arrival of the payment authorization timing may be checked in a manner of checking that the figure of the bar shape displayed on the top portion of the display unit 151 is entirely removed. In this case, as shown in FIG. 5 (b), a small card image moves to a middle portion of a screen in a manner of being enlarged and a screen for the payment authorization moves from a bottom portion of the screen toward a top portion of the screen. And, a guide screen for indicating whether the payment is authorized may be displayed as shown in FIG. 5 (c). In this case, a user can cancel or authorize the payment. An example shown in FIG. 5 (c) corresponds to a case that the user inputs a fingerprint as a payment authorization input. If the authorization input of the user is inputted normally, the control unit 180 may control the wireless communication unit 110 to transmit the payment information. And, after checking that the payment information has been transmitted, the control unit 180 may control a screen for informing that the payment is successfully performed to be displayed on the display unit 151 as an example shown in FIG. 5 (d). Moreover, the control unit 180 may control a graphic effect for showing that the card image displayed on the screen slides at a point of a window displayed on the screen to be displayed in order for the user to intuitively know that the payment is performed.

The payment authorization input according to the present specification may be implemented as various types of methods. The various types of methods may include a simple screen touch, a password input, a pattern input, a biometric information input such as iris or blood vessel authentication, and the like.

The control unit 180 according to the present specification may change a payment authorization input method depending on an input of the user or a situation of the user.

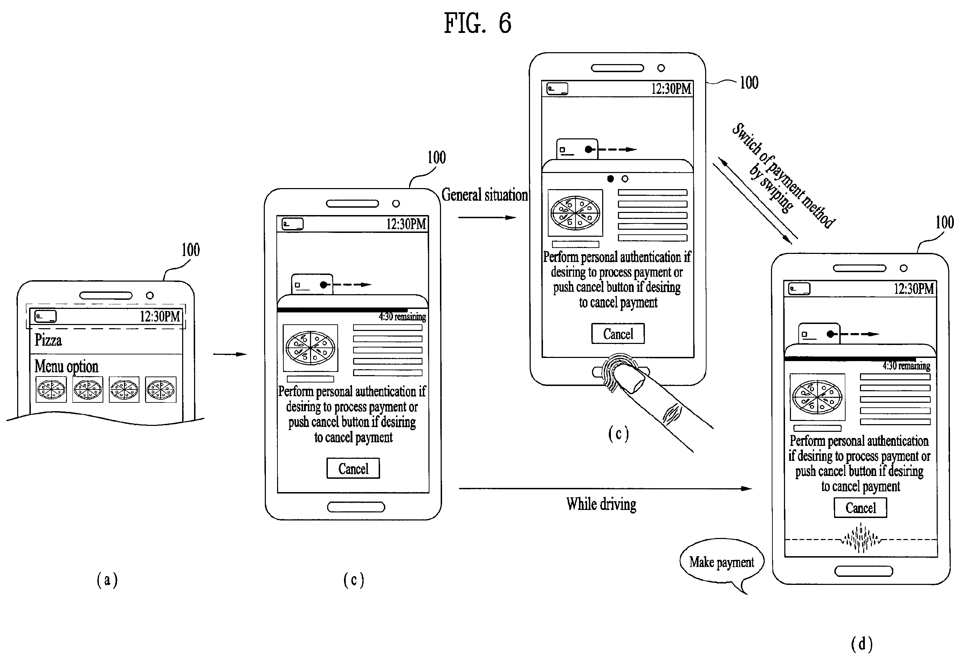

FIG. 6 is a diagram for an example of changing a payment authorization input method.

It may be checked that FIGs. 6 (a) and (b) are identical to FIGs. 5 (a) and (c), respectively. And, the following steps correspond to steps of receiving an authorization input of a user. In this case, the user may select a payment authorization input method. In a general case, the user may select a fingerprint input shown in FIG. 6 (c) as the payment authorization input method. However, in case that the user has difficulty in operating the mobile terminal 100 directly as the user is driving, it may be possible to select a voice input method. In this case, the control unit 180 may change the payment authorization input method depending on an input of the user. Further, the control unit 180 may change the payment authorization input method without the input of the user depending a situation of the user in a manner of being aware of the situation of the user (e.g., the user is currently driving) through a connection state of a device connected to a vehicle.

Meanwhile, if the display unit 151 is turned off, the control unit 180 may control a guide screen for indicating whether to authorize the payment to be displayed on the display unit 151.

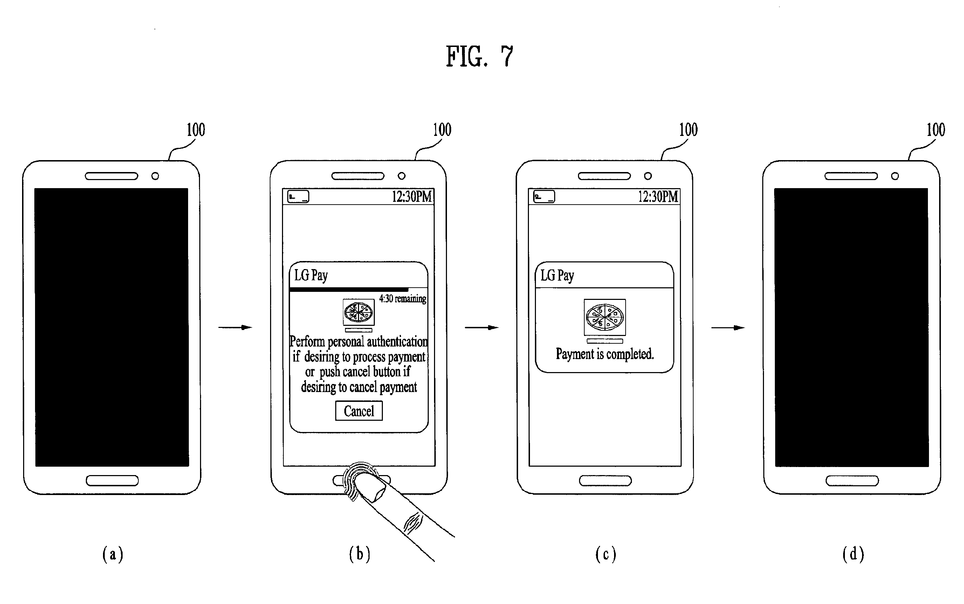

FIG. 7 is a diagram for an example of displaying a guide screen for indicating whether to authorize a payment in a situation that a display unit is turned off.

Referring to FIG. 7 (a), it may be checked that the display unit 151 is turned off. In this case, if the payment authorization timing arrives, a guide screen for indicating whether to input the payment authorization may be displayed on the display unit 151 as shown in FIG. 7 (b). And, if the payment authorization is inputted, a screen for informing that the payment is successfully performed may be displayed on the display unit 151 as shown in FIG. 7 (c). Thereafter, the display unit 151 may be turned off again as shown in FIG. 7 (d).

The control unit 180 according to the present specification may stand by the payment authorization input of the user during a predefined time if the payment authorization timing arrives.

Referring back to FIGs. 5 to 7, an indication of '4:30 remaining' may be checked on the guide screen for indicating whether to authorize the payment. The above time may indicate a time available for the payment authorization input. If the payment authorization timing arrives, the control unit 180 may stand by the payment authorization input of the user during the predefined time.

Meanwhile, the user may not input the payment authorization until after the standby time.

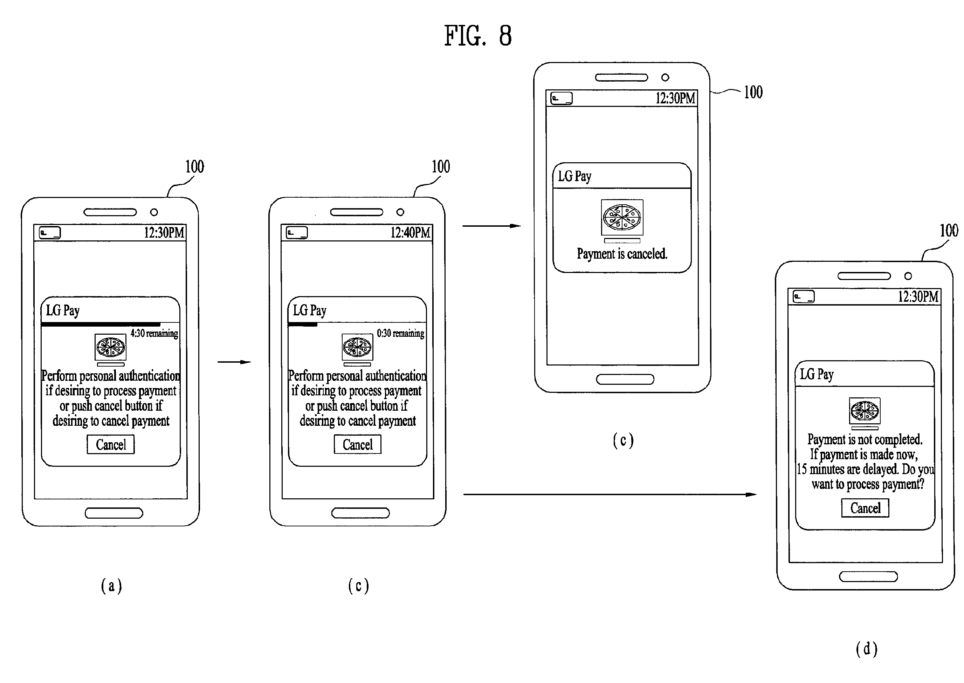

FIG. 8 is a diagram for an example of a situation of no payment authorization input from a user.

Referring to FIGs. 8 (a) and (b), it may be checked that a user does not input the payment authorization until after the standby time. In this case, according to one embodiment, the control unit 180 may cancel the payment process as shown in FIG. 8 (c). According to another embodiment, if the payment authorization is inputted after the standby time, the control unit 180 may display a delayed time as shown in FIG. 8 (d).

On the other hand, if the payment authorization input is received after the standby time, the control unit 180 may control a guide screen for indicating whether to change the payment information to be displayed on the display unit 151.

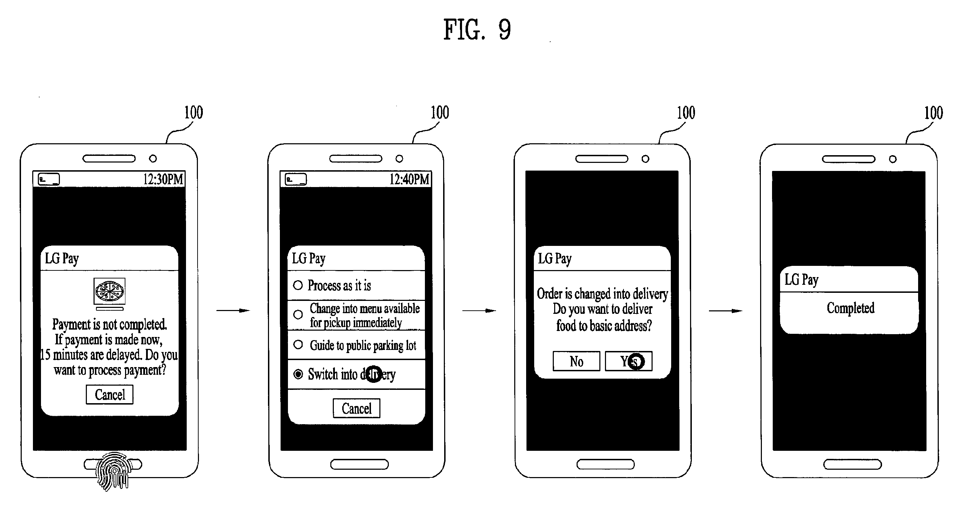

FIG. 9 is a diagram for an example of displaying a guide screen for indicating whether to change a payment information.

Referring to FIG. 9(a), a payment standby time is expired already like a situation shown in FIG. 8 (d). However, in an example shown in FIG. 9(a), it may be checked that the user inputs the payment authorization. Therefore, the control unit 180 may process the payment and control a guide screen for indicating whether to change the payment information to be displayed on the display unit 151. In case that the payment is not performed at the payment authorization timing, the user may desire to change the payment information. For instance, various demands from the user such as changing the ordered food menu, changing into delivery of the food and the like may exist depending on various situations. Moreover, the payment may be processed without any change in the payment information. Further, the user may desire to park a car in a nearby parking lot and to stand by that the food is ready. An example in FIG. 9(b) shows a situation of selecting one option among options, which relates to reception of the food, of the payment information in order to switch from a direct pickup into delivery. Therefore, as shown in FIGs. 9(c) and (d), the payment may be completed in accordance with the changed payment information.

According to another embodiment of the present specification, the control unit 180 may run an automatic call sending mode after the standby time elapses without the payment authorization input of the user.

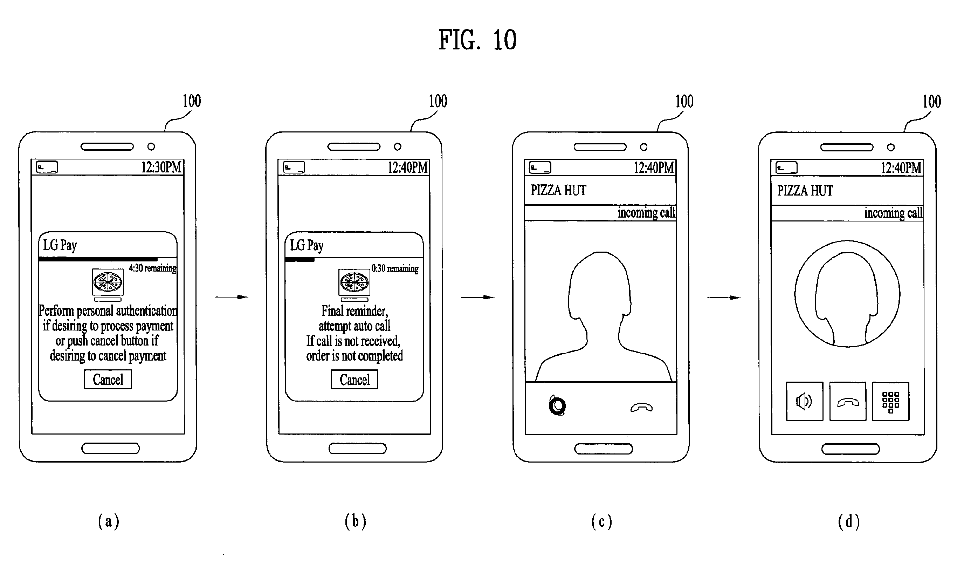

FIG. 10 is a diagram for an example of an automatic call sending mode after elapse of a payment standby time.

Referring to FIG. 10 (a), it may be checked that a current timing corresponds to the payment authorization timing and that the payment authorization input standby time still remains. If it is assumed that the user does not input the payment authorization, the control unit 180 may control a guide screen for informing that an automatic call sending mode may be run to be displayed on the display unit 151 as shown in FIG. 10 (b) in the course of displaying the remaining standby time. And, if the standby time is expired, the control unit 180 may run the automatic call sending mode as shown in FIG. 10 (c). The automatic call sending mode may correspond to a mode of sending a call to a service provider included in the payment information. Moreover, the user may perform a reorder of food or the payment through a direct call to the service provider as shown in FIG. 10 (d).

The control unit 180 according to the present specification may edit the payment information through the input of the user.

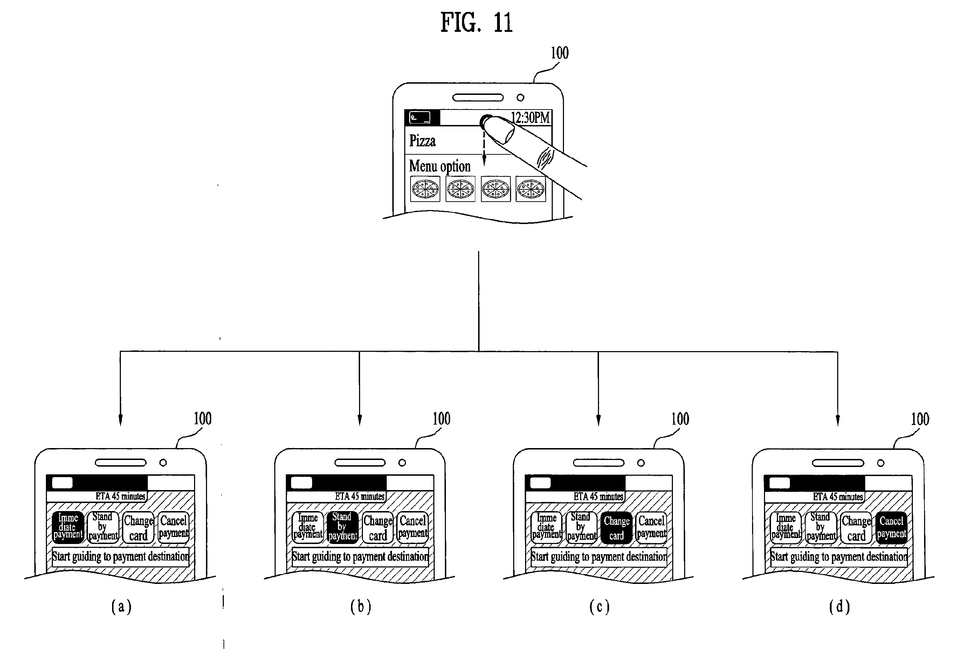

FIG. 11 is a diagram of an example for a user to edit a payment information after setting a reserved payment.

Referring to FIG. 11, it may be checked in a top portion of the drawing that the user touches and drags a state bar indicating the payment authorization timing. This input corresponds to an input for the user to edit the payment information and is just exemplary. If the control unit 180 receives a user input for editing the payment information of the user, the control unit 180 may control an interface capable of editing the payment information to be displayed on the display unit 151. Referring to FIGs. 11 (a) to (d), it may be checked that an input interface including 'immediate payment', 'stand by payment', 'change card', 'cancel payment' and 'start guiding to payment destination' is displayed on the interface displayed on the display unit 151. The user may change the payment information through each button displayed on the interface. The case that the user selects the 'start guiding to payment destination' from the above-mentioned examples will be described in more detail.

The payment authorization timing according to the present specification can be set variously. The control unit 180 basically sets the payment authorization timing for the payment information in response to the user input through the display unit 151. In this case, the user input may correspond to an input for selecting a scheme of setting the payment authorization timing.

Referring back to FIG. 3 (b), it may be checked that the screen capable of setting the payment authorization timing is displayed. According to one embodiment, the set payment authorization timing may correspond to a time directly inputted by the user. In particular, the user directly inputs a time for a desired payment authorization timing. According to another embodiment, the set payment authorization timing may correspond a time which is set by the control unit 180 based on an estimated arrival time. In more detail, the control unit 180 can be aware of destination of the user using the payment information. And, the control unit 180 may calculate the estimated arrival time in a manner of considering a moving distance and a moving time using the destination. In this case, if the user inputs that a desired payment authorization timing is '30 minutes ago' with reference to the estimated arrival time, the control unit 180 may set 30 minutes before the estimated arrival time to the payment authorization time using the estimated arrival time and the information inputted by the user.

The control unit 180 according to the present specification may launch a navigation application for guiding a way using the payment information.

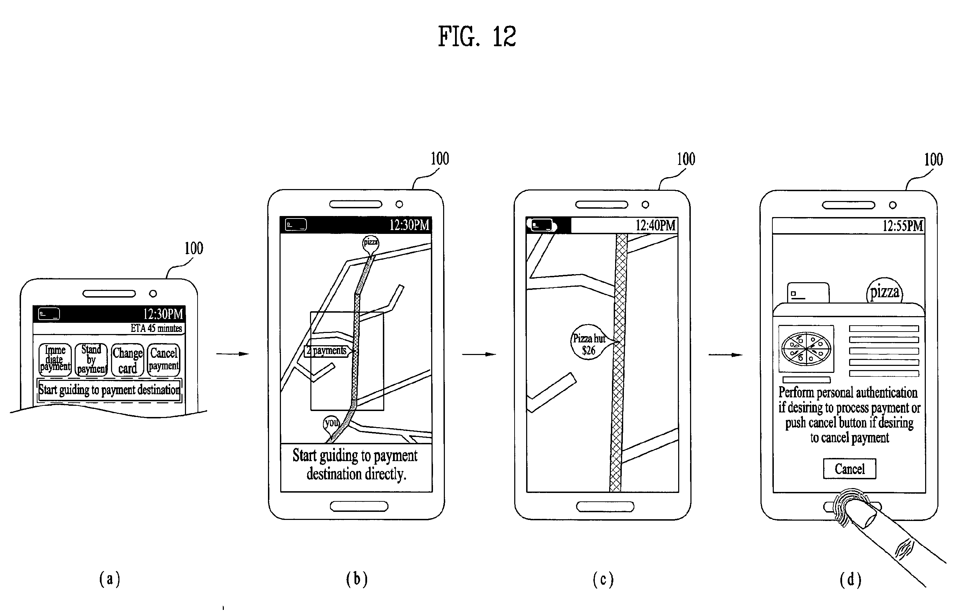

FIG. 12 is a diagram of an example for a navigation application to guide a way to destination using a payment information.

Referring to FIG. 12 (a), it may be checked that a user selects the 'start guiding to payment destination'. The control unit 180 may use an address information of a service provider information included in the payment information in order to set destination of the navigation.

Meanwhile, the control unit 180 may control an information on the payment authorization timing to be displayed on a moving path guided by the navigation. It may be checked that 2 reserved payments are displayed on the moving path as shown in FIG. 12 (b). Therefore, the user may check the information on the payment authorization timing through the screen.

Further, if the payment authorization timing almost arrives, the control unit 180 may control a part of the payment information to be displayed on the moving path. It may be checked that a scale of a map displayed on the navigation application is changed as shown in FIG. 12 (c) as the payment authorization timing almost arrives. Moreover, it may be checked that the screen, which simply displays an information on the number of the reserved payments on the moving path only, is switched into a screen displaying a target for the payment and a payment amount. As the examples shown in the drawings, if the payment authorization timing almost arrives, the control unit 180 may control a part of an essential information of the payment information to be displayed on the navigation screen.

Moreover, with regard to the payment authorization timing, if the user arrives at a payment authorization point on the navigation, the control unit 180 may receive the payment authorization information from the user as shown in FIG. 12 (d).

Meanwhile, the examples shown in FIGs. 12 (b) and (c) corresponds to embodiments having a fixed payment amount in a situation that food is ordered. If the payment amount is not fixed (e.g., if a payment amount in case of picking up the food directly is different from that in case of delivery of the food), more various and particular informations may be displayed on the navigation. Further, in case that the payment is completed, a timing (or point) at which the payment is completed and a payment amount information may be displayed on the navigation screen as well.

A case that the payment amount may be changed will be described in detail. Assume a case that a user stays in a hotel as an example of the changeable payment amount. The reason for it is that a payment amount is decided in check-out instead of in check-in in case of staying in a hotel.

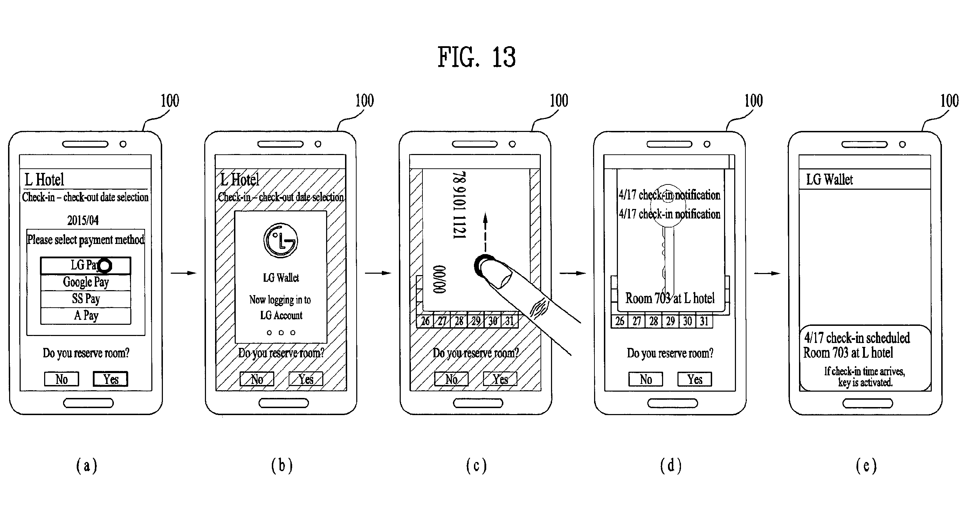

FIG. 13 is a diagram for an example of a reserved payment for a hotel stay payment.

Since FIGs. 13 (a) to (c) relates to the above-mentioned reserved payment process, a redundant description of the process shall be omitted. Referring to FIG. 13 (d), if the payment is completed, the control unit 180 may control a name of a hotel, a room number, and check-in/out time to be displayed on the display unit 151 using a part of the payment information. Meanwhile, the control unit 180 may receive an electric key information of a paid room from the hotel. The electric key has a unique information capable of unlocking the paid room. Moreover, the room cannot be unlocked before the check-in time since the electric key is deactivated. Moreover, the electric key can perform a function of an actual room key in a manner of being activated during a time from the check-in to the check-out only. Therefore, as shown in FIG. 13(e), the control unit 180 may control the deactivated electric key to be displayed on the display unit 151 at the time of the payment.

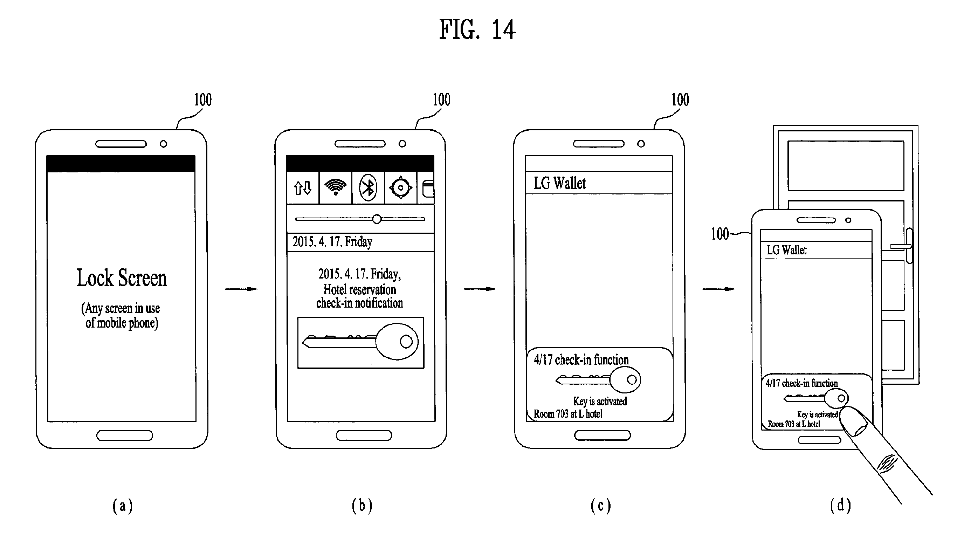

FIG. 14 is a diagram for an example of an activated electronic key.

Referring to FIG. 14, examples of staying in a hotel room using an activated electric key are sequentially described with reference to FIGs. 14 (a) to (d). In this case, the control unit 180 may control a screen to be displayed on the display unit 151 or the short-range communication module 114 to transmit the electric key information to a room lock device as examples shown in the drawings.

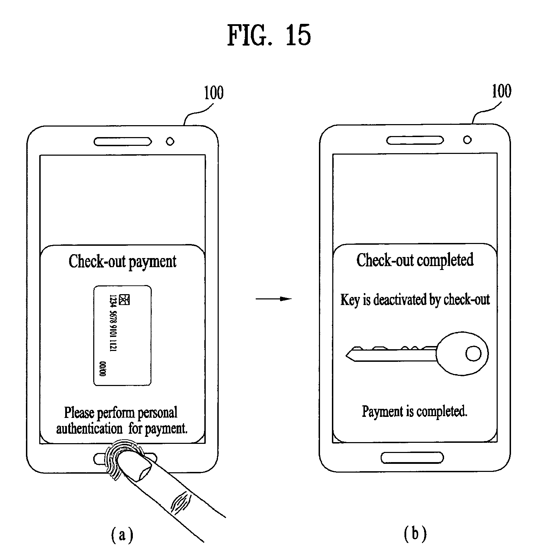

FIG. 15 is a diagram for an example of a hotel check-out payment.

Referring to FIG. 15, a user processes a check-out payment. If the check-out is completed, the user may check the deactivated electric key as a result of the check-out. When the hotel stay is paid, the control unit 180 may control an information on a check-out timing to be saved. Therefore, the control unit 180 may set the payment authorization timing as the check-out timing. However, since the payment amount is decided at the check-out timing different from the above-mentioned normal payment, the reserved payment may be set in a situation that the payment amount of the payment information is not decided.

In addition, the above-described methods can be implemented in a program recorded medium as computer-readable codes. The computer-readable media may include all kinds of recording devices in which data readable by a computer system are stored. The computer-readable media may include HDD (hard disk drive), SSD (solid state disk), SDD (silicon disk drive), ROM, RAM, CD-ROM, magnetic tapes, floppy discs, optical data storage devices, and the like for example and also include carrier-wave type implementations (e.g., transmission via Internet). Further, the computer may include the control unit 180 of the terminal. It will be appreciated by those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A mobile terminal, comprising:
a wireless communication unit configured to transmit a payment information;
a display device configured to receive an input and to display a screen related to the payment information; and
a controller configured to set a payment authorization timing for the payment information in response to the input at the display device, and in response to receiving a payment authorization input at the payment authorization timing, the controller configured to control the wireless communication unit to transmit the payment information.

2. The mobile terminal of claim 1, wherein the controller is configured to control the display device to display a payment information, relating to the set payment authorization timing, further the controller is configured to control the display device to display a remaining time until a time point at the set payment authorization timing.

3. The mobile terminal of claim 1 or 2, wherein in response to arrival of the payment authorization timing, the controller is configured to control the display device to display a guide screen to receive the payment authorization input.

4. The mobile terminal of one of claims 1 to 3, wherein the payment authorization input comprises at least one selected from the group consisting of a screen touch input, a password input, a pattern input and a biometric information input, further the controller is configured to change a type of the payment authorization input based on either the input of a user or a situation of the user.

5. The mobile terminal of one of claims 1 to 4, wherein in response to arrival of the payment authorization timing, the controller is configured to wait for the payment authorization input during a standby time, further when the standby time elapses without the payment authorization input, the controller is configured to cancel a payment process.

6. The mobile terminal of claim 5, wherein in response to receiving the payment authorization input while the standby time elapses without the payment authorization input, the controller is configured to control the display device to display a delayed time.

7. The mobile terminal of claim 6, wherein when the payment authorization input is received after the standby time elapses, the controller is configured to control the display device to display a guide screen for indicating whether to change the payment information.

8. The mobile terminal of claim 5, wherein when the standby time elapses without the payment authorization input, the controller is configured to execute operation of an automatic call sending mode.

9. The mobile terminal of one of claims 1 to 8, wherein the set payment authorization timing corresponds to a time directly inputted by the user.

10. The mobile terminal of one of claims 1 to 8, wherein the set payment authorization timing corresponds to a time set based on an estimated arrival time calculated using the payment information.

11. The mobile terminal of one of claims 1 to 10, wherein the controller is configured to launch a navigation application for guiding payment based on the payment information, further the controller is configured to control the display device to display a moving path displayed by the navigation application.

12. The mobile terminal of claim 11, wherein when the payment authorization timing has almost arrived, the controller is configured to control the display device to display a part of the payment information on the moving path.

13. A method of controlling a mobile terminal, comprising:
in response to receiving an input at a display device, setting a payment authorization timing for a payment information;
displaying, on the display device, a payment authorization guide screen at the payment authorization timing; and
in response to receiving a payment authorization input, controlling a wireless communication unit to transmit the payment information.

14. The method of claim 13, wherein the payment authorization input comprises at least one selected from the group consisting of a screen touch input, a password input, a pattern input and a biometric information input.

15. The method of claim 13 or 14, further comprising displaying, on the display device, a remaining time until a time point of the set payment authorization timing, wherein in response to arrival of the payment authorization timing, displaying information relating to waiting for the payment authorization input during a standby time.
